# EUROPÄISCHE PATENTSCHRIFT

(11) **EP 0 561 394 B1**
(45) Veröffentlichungstag und Bekanntmachung des Hinweises auf die Patenterteilung: **07.02.1996**
(21) Anmeldenummer: 93104398.8
(22) Anmeldetag: 18.03.1993
(51) Int. Cl.: B60G 11/28, B62D 61/12, F16F 9/05

(54) **Luftfeder**
Air spring
Ressort pneumatique

(30) Priorität: 20.03.1992 DE 4209039
(43) Veröffentlichungstag der Anmeldung: 22.09.1993
(73) Patentinhaber: BPW Bergische Achsen Kommanditgesellschaft, D-51674 Wiehl (DE)
(72) Erfinder: Adolfs, Manfred, W-5275 Bergneustadt (DE); Leidig, Hans-Josef, W-5226 Reichshof (DE); Steiner, Helmut, W-5276 Wiehl (DE)
(74) Vertreter: Stenger, Watzke & Ring Patentanwälte

(56) Entgegenhaltungen:
- DE-A- 3 212 894
- DE-B- 1 048 165
- DE-U- 1 811 683
- FR-A- 1 350 020
- GB-A- Q9 081
- GB-A- 854 823
- GB-A- 998 110
- US-A- 2 917 319
- US-A- 5 058 916

## Beschreibung

Die Erfindung betrifft eine Luftfeder für Luftfederachsen mit einem fahrgestellfesten Deckel und einem Tauchkolben sowie einem dazwischen eingesetzten Rollbalg, wobei der Tauchkolben auf dem rückwärtigen Ende eines Längslenkers abgestützt und an seiner Unterseite offen ist und auf dem Längslenker ein Stützbock befestigt und zwischen dem Tauchkolben und dem Stützbock ein Gelenk angeordnet ist.

Eine Luftfeder der vorstehend beschriebenen Art ist aus der DE-B-1 048 165 bekannt. Bei dieser bekannten Luftfeder ist das Gelenk zwischen Tauchkolben und Stützbock so konstruiert, daß es sich nicht öffnen kann.

Eine Weitere Luftfeder mit einem zwischen Tauchkolben und Stützbock angeordneten Gelenk ist aus der GB-A-854 823 bekannt. Diese bekannte Luftfeder ist jedoch so konstruiert, daß die Gelenkverbindung einerseits nicht ohne Montage trennbar ist und andererseits im getrennten Zustand der Gelenkverbindung der Tauchkolben mit dem massiv ausgebildeten Kugelgelenkteil am Rollbalg hängt und diesen in unzulässiger Weise überdehnt.

Davon ausgehend liegt der Erfindung die **Aufgabe** zugrunde, eine einfache Luftfeder zu schaffen, die auch für eine Kran- und Bahnverladung geeignet ist.

Die **Lösung** dieser Aufgabenstellung durch die Erfindung ist dadurch gekennzeichnet, daß das Gelenk als offenes, in der entlüfteten Position des Rollbalges frei trennbares Stützlager ausgebildet ist und der Tauchkolben in der entlüfteten Position des Rollbalges unter der Wirkung des Rollwiderstandes des Rollbalges in der entlüfteten Position hängenbleibt.

Bei einer erfindungsgemäß ausgebildeten Luftfeder kann sich das Gelenk öffnen, so daß bei einer Bahn- oder Kranverladung ein vollständiges Ausziehen des Luftfederbalges vermieden wird.

Für eine praktische Ausführung gibt es zwei grundsätzliche Möglichkeiten für die Ausbildung des offenen Gelenkes zwischen Tauchkolben und Stützbock. Bei einer ersten Ausführungsform kann das offene Stützlager aus einer am Boden des Tauchkolbens befestigten Stützrolle und einem am freien Ende des Stützbockes befestigten V-förmigen Widerlager bestehen. Es ist aber auch möglich, am Boden des Tauchkolbens ein kugelförmig geformtes Stützteil und am Stützbock ein kugelpfannenförmiges Widerlager anzuordnen.

Die Erfindung ergibt sich aus der nachfolgenden Beschreibung der zugehörigen Zeichnungen, in denen eine bevorzugte Ausführungsform einer erfindungsgemaß ausgebildeten Luftfeder in verschiedenen Betriebsstellungen schematisch dargestellt ist. In den Zeichnungen zeigen:
- Fig. 1: eine Luftfederachse mit offenem Stützlager zwischen Tauchkolben und Stützbock im normalen Fahrbetrieb;
- Fig. 2: die Luftfederachse nach Fig. 1 mit vollständig ausgefederter Luftfeder;
- Fig. 3: die Luftfederachse nach Fig. 1 mit entlüfteter und eingefahrener Luftfeder und
- Fig. 4: die Luftfederachse nach Fig. 1 mit entlüfteter und geöffneter Luftfeder.

Bei der dargestellten Luftfederachse ist zwischen einem Teil eines Fahrzeugrahmens 1 und einem an einer Konsole 2 schwenkbar angelenkten Längslenker 3 eine Luftfeder 4 für eine Achse 5 angeordnet.

Die Luftfeder 4 besteht aus einem am Fahrzeugrahmen 1 befestigten Deckel 6, einem Rollbalg 7 und einem sich auf dem Längslenker 3 abstützenden, unten offenen Tauchkolben 8. Auf der Oberseite des Tauchkolbens 8 ist ein Puffer 9 befestigt, der sich bei entlüfteter Luftfeder 4 gegen die Innenseite des Deckels 6 legt.

Zwischen der Luftfeder 4 und einem am freien Ende des Längslenkers 3 angeordneten Stützbock 10 ist ein offenes Stützlager 14 angeordnet, welches aus einer am Boden des Tauchkolbens 8 befestigten Stützrolle 15 und einem am freien Ende des Stützbockes 10 befestigten V-förmigen Widerlager 16 besteht.

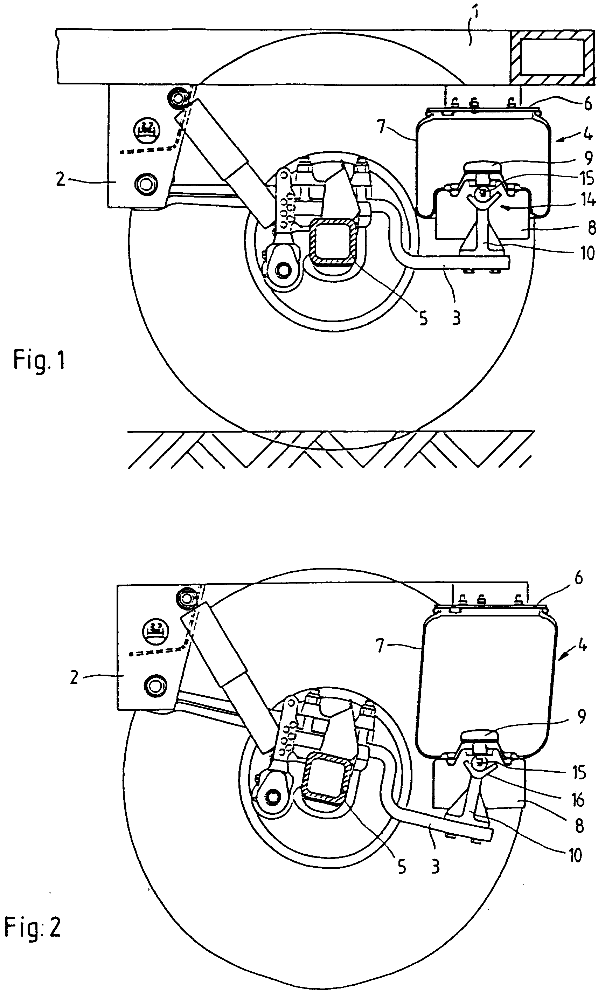

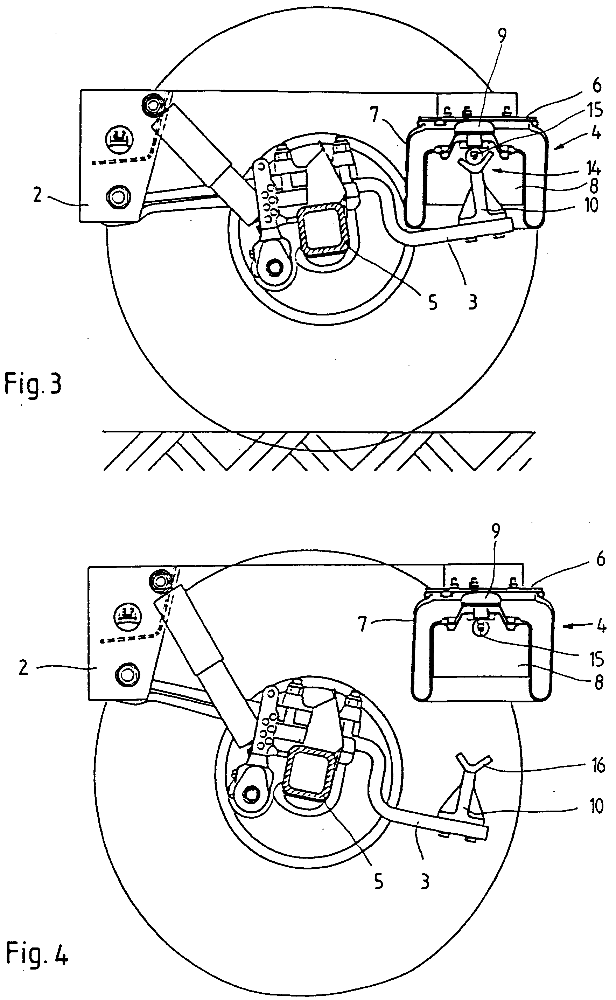

Bei den in den Fig. 1 bis 3 dargestellten Betriebsstellungen "normaler Fahrbetrieb", "vollständige Ausfederung", "Entlüftung und vollständige Einfederung" bleiben die Stützrolle 15 und das Widerlager 16 in Kontakt. Wenn aber das Fahrzeug für eine Kran- und Bahnverladung angehoben wird (Fig. 4), kann sich die Achse 5 nach unten bewegen, ohne daß deren Gewicht auf den Rollbalg 7 übertragen wird, weil der Tauchkolben 8 in der entlüfteten Position hängen bleibt und sich der Stützbock 10 mit dem Widerlager 16 aus dem Tauchkolben 8 herausbewegt. Der Tauchkolben 8 bewegt sich nicht nach unten, weil der Rollwiderstand des Rollbalges 7 so groß ist, daß er in seiner angehobenen, entlüfteten Position festgehalten wird. Im abgestellten Zustand nach der Kranverladung bewegt sich der Stützbock 10 mit seinem Widerlager 16 wieder in die in der Fig. 3 dargestellte Lage.

### Bezugszeichenliste

- 1: Fahrzeugrahmen
- 2: Konsole
- 3: Längslenker
- 4: Luftfeder
- 5: Achse
- 6: Deckel
- 7: Rollbalg
- 8: Tauchkolben
- 9: Puffer
- 10: Stützbock
- 14: Stützlager
- 15: Stützrolle
- 16: Widerlager

## Patentansprüche

1. Luftfeder für Luftfederachsen mit einem fahrgestellfesten Deckel (6) und einem Tauchkolben (8) sowie einem dazwischen eingesetzten Rollbalg (7), wobei der Tauchkolben (8) auf dem rückwärtigen Ende eines Längslenkers (3) abgestützt und an seiner Unterseite offen ist und auf dem Längslenker (3) ein Stützbock (10) befestigt und zwischen dem Tauchkolben (8) und dem Stützbock (10) ein Gelenk angeordnet ist,
**dadurch gekennzeichnet,**
daß das Gelenk als offenes, in der entlüfteten Position des Rollbalges (7) frei trennbares Stützlager (14) ausgebildet ist und der Tauchkolben (8) in der entlüfteten Position des Rollbalges (7) unter der Wirkung des Rollwiderstandes des Rollbalges (7) in der entlüfteten Position hängenbleibt.

2. Luftfeder nach Anspruch 1, dadurch gekennzeichnet, daß am Boden des Tauchkolbens (8) eine Stützrolle (15) und am freien Ende des Stützbockes (10) ein V-förmiges Widerlager (16) befestigt sind.

3. Luftfeder nach Anspruch 1, dadurch gekennzeichnet, daß am Boden des Tauchkolbens (8) ein kugelförmig geformtes Stützteil und am Stützbock (10) ein kugelförmig ausgebildetes Widerlager befestigt sind.

## Claims

1. Pneumatic spring for pneumatic-spring axles, having a cover (6) which is fixed to the chassis and a trunk piston (8) and a roller bellows (7) inserted between them, the said trunk piston (8) being supported on the rear end of a longitudinal Link (3) and being open at its underside, and a supporting block (10) being attached on the longitudinal link (3), and a joint being arranged between the trunk piston (8) and the supporting block (10), characterized in that the joint is designed as an open supporting bearing (14) which can be freely separated in the vented position of the roller bellows (7) and, in the vented position of the roller bellows (7), the trunk piston (8) remaining in the vented position under the effect of the roll resistance of the roller bellows (7).

2. Pneumatic spring according to Claim 1, characterized in that a supporting roller (15) is attached to the bottom of the trunk piston (8) and a V-shaped abutment (16) is attached to the free end of the supporting block (10).

3. Pneumatic spring according to Claim 1, characterized in that a spherically shaped supporting part is attached to the bottom of the trunk piston (8) and a spherically designed abutment is attached to the supporting block (10).

## Revendications

1. Ressort pneumatique pour essieux à coussin d'air, comprenant un couvercle (6) solidaire du châssis, un piston plongeur (8) et, inséré entre eux, un soufflet (7) en U, le piston plongeur (8) reposant sur l'extrémité arrière d'un bras oscillant longitudinal (3) et étant ouvert sur sa face inférieure, une sellette (10) étant fixée au bras oscillant longitudinal (3) et une articulation étant prévue entre le piston plongeur (8) et la sellette (10), caractérisé en ce que l'articulation est conçue sous la forme d'un palier de support (14) ouvert qui peut se séparer librement lorsque le soufflet (7) en U est en position de purge d'air, et en ce que, sous l'effet de La résistance au roulement du soufflet (7) en U, le piston plongeur (8) demeure en position de purge d'air lorsque le soufflet (7) en U se trouve en position de purge d'air.

2. Ressort pneumatique selon la revendication 1, caractérisé en ce qu'un galet d'appui (15) est fixé au fond du piston plongeur (8) et un moyen de contre-appui (16) en V est fixé à l'extrémité libre de la sellette (10).

3. Ressort pneumatique selon la revendication 1, caractérisé en ce qu'une pièce d'appui sphérique est fixée au fond du piston plongeur (8) et un moyen de contre-appui en forme de cuvette sphérique est fixé à la sellette (10).
